(19) **Europäisches Patentamt**

**European Patent Office**

**Office européen des brevets**

(11) **EP 1 051 580 B1**

(12) **EUROPEAN PATENT SPECIFICATION**

(45) Date of publication and mention
of the grant of the patent:
**02.01.2004   Bulletin 2004/01**

(51) Int Cl.[7]: **F17C 1/00**

(86) International application number:
**PCT/DK1999/000071**

(21) Application number: **99904731.9**

(22) Date of filing: **29.01.1999**

(87) International publication number:
**WO 1999/039130 (05.08.1999 Gazette 1999/31)**

(54) **AN INSTALLATION FOR FILLING LIQUIFIED GAS INTO CONTAINERS**

ANLAGE ZUM FÜLLEN EINES BEHÄLTERS MIT FLÜSSIGEM GAS

INSTALLATION DE REMPLISSAGE DE GAZ LIQUEFIE DANS DES RESERVOIRS

(84) Designated Contracting States:
**AT DE ES FR GB IT**

(30) Priority: **30.01.1998  DK 13398**
**07.10.1998  DK 127698**

(43) Date of publication of application:
**15.11.2000   Bulletin 2000/46**

(73) Proprietor: **Kosan Crisplant A/S**
**8200 Arhus N (DK)**

(72) Inventors:
 • **JENSEN, Erik**
 **DK-8240 Risskov (DK)**

 • **NIELSEN, Bent, Lindrup**
 **DK-8963 Auning (DK)**

(74) Representative: **Plougmann & Vingtoft A/S**
**Sundkrogsgade 9,**
**P.O. Box 831**
**2100 Copenhagen O (DK)**

(56) References cited:
**EP-A- 0 534 876       EP-A- 0 537 094**
**EP-A- 0 617 226       EP-A- 0 641 966**
**EP-A- 0 660 027       EP-A- 0 661 493**
**US-A- 5 794 645**

**Description**

TECHNICAL FIELD

The present invention relates to an installation for filling liquified gas into containers. A first aspect of the invention relates to an installation having a distributed power supply system for supplying power consuming parts of the installation. A second aspect of the invention relates to an installation having a generator for generating power for supplying power consuming parts of the installation.

BACKGROUND ART

Installations for filling liquified gas into containers and accessories for such installations are known from a number of prior art documents, including EP 0 534 876 A1, EP 0 537 094 A1, EP 0 578 958 A1, EP 0 617 226 A1, EP 0 641 966 A1, EP 0 660 027 A1, EP 0 661 493 A1. Such prior art installations usually comprise one or more carrousels or turntables on which the containers are positioned during the process of filling them with liquified gas. A carrousel normally comprises a number of filling assemblies each of which is adapted to support a container.

The filling assembly usually comprises different kind of equipment for handling the container before, during and after filling process, such as a scales, a valve, means for positioning the container in relation to the valve means for opening a closure/opening mechanism provided in the container and means for connecting the valve to the opening of container. The installation may further comprise an electronic control system for controlling the filling process, so that the desired amount of liquified gas may be filled into the container. Such equipment is usually driven by electrical power. In common prior art installations, an AC/DC power supply is associated to each filling assembly. In case the equipment of the filling assemblies is driven by direct current, each filling assembly may comprise means for converting alternating current into direct current. Due to the highly explosive environment, the risk of explosions caused by any electrical or other equipment capable of generating sparks/ignition has to be minimized. Thus, in usual installations this risk is minimized by securing electrical and other equipment, e.g., by embedding electrical parts in special housings and/or by designing electrical circuits in a safe way.

EP 0 617 226 A1 discloses a carrousel comprising a table carrying a series of rockers intended to support the bottles (cylinders), means for making the table turn in order to transfer the bottles from a loading station to an unloading station, robots (automatons) for introducing controlled quantities of gas into the bottles while they are being transferred from the loading station to the unloading station, and a rotating joint to allow the robots to be supplied with gas and with compressed air.

The table supports a pneumatic motor supplied with compressed air from the rotating joint, an electric-current generator intended to be driven by the pneumatic motor and an electric circuit with intrinsic safety housed in an anti-explosion box and connected to the generator in order to supply the robots with electrical current. The present invention seeks to provide an improved installation, as discussed below.

DESCRIPTION OF THE INVENTION

It has been found that the layout of an installation wherein an individual power supply is associated to each filling assembly needs extensive measures in order to minimise the risk of causing explosions, and thus installations with such a layout are expensive to manufacture and install. However, due to the relatively high power consumption of the equipment of the filling assemblies, no alternative layouts have been available so far.

An object of the present invention is therefore to provide an installation for filling liquified gas into containers which is safe to a maximum degree while being relatively easy to implement and manufacture so as to thereby increase the security of the installation and to reduce the costs related to manufacturing and installation. A further object of the invention is to provide an installation wherein the power consumption of power consuming parts of the filling assemblies is reduced compared to prior art installations, so as to thereby reduce the operating costs of the installation.

Thus, according to a first aspect, the present invention provides an installation for filling liquified gas into containers and comprising: a plurality of filling assemblies each of which comprises one or more power consuming parts, each filling assembly being adapted to support a container at least during the process of filling liquified gas into the container,

at least one AC/DC to DC converter for converting alternating current from an alternating current power supply or direct current from a direct current power supply into direct current, each AC/DC to DC converter being adapted to supply direct current to at least two filling assemblies.

The AC/DC to DC converter may be a AC to DC converter for converting alternating current into direct current or it may be a DC to DC converter or it may be a combination of an AC to DC converter and a DC to DC converter. In particular, a DC to DC converter may be adapted to reduce the voltage of direct current supplied to the converter from, e.g., 24 V to, e.g., 12 V. An AC to DC converter is typically adapted to convert alternating current having a RMS voltage of 230 V AC to direct current having a voltage of 12 V DC. The AC/DC to DC converter comprised in the installation according to the invention is preferably adapted to reduce the voltage of the electrical power supplied to the installation, the voltage being reduced from a relatively high level to a relatively low level, low voltage.

In the present context, voltage at the relative high level which may be, e.g., 24 V DC or 230 V AC, is referred to as "high voltage" whereas the relative low level which may be, e.g., 12 V DC is referred to as "low voltage".

Due to the special design of the power supplying system of an installation according to the invention, the power consuming parts of two or more filling assemblies may be supplied with current at low voltage. This has the particular advantage that, compared to prior art installations, fewer high voltage power supply units having a considerably higher risk of causing ignition than low voltage power supply units are required.

Moreover, the power distribution network of the installation according to the invention has a considerably lower risk of causing ignition of the explosive atmosphere as compared to prior art installations. This is due to the fact that the power distribution network of an installation according to the invention is a low voltage network having a considerably lower risk of creating sparks. Preferably, all high voltage power supplying units in the distribution network of the installation are positioned in a non-explosive environment (non-hazardous area) so as to minimize risk of creating sparks and/or causing ignition of the explosive atmosphere in a highly explosive environment (hazardous area). In particular, all high voltage power supplying units may be positioned in a remote location relative to the filling assemblies.

A still further advantage of an installation according to the invention is that the measures necessary in order to minimize the risk of creating sparks/ignition are easier to implement and cheaper to manufacture due to the fact that fewer high voltage parts and cables are required than in prior art installations.

Preferably at least one of the filling assemblies and more preferably all of the filling assemblies are mounted on a movable structure such as, e.g., a carrousel or turntable or a conveyor.

In case power is supplied from an alternating current supply, the voltage of the power supply is in the range between 110 V and 120 V or in the range between 210 V and 240 V. Usually the voltage of the alternating power supply is approximately 115 V or approximately 230 V. In case power is supplied from an direct power supply, the voltage of the direct current supply preferably is in the range between 1 and 100 V, such as between 5 and 50 V, usually between 8 and 32 V, such as approximately 24 V.

A second aspect of the present invention relates to an installation for filling liquified gas into containers and comprising:

at least one filling assembly each comprising one or more power consuming parts, each filling assembly being adapted to support a container at least during the process of filling liquified gas into the container,

a movable structure on which the at least one filling assembly is mounted,

a stationary structure along which the movable structure may move, at least one generator for generating electrical current so as to supply current to the one or more power consuming parts, the at least one generator comprising one or more stationary parts and one or more moving parts,

the relative movement between the stationary and the movable parts of the generator being generated by the relative movement between the movable structure and the stationary structure.

An installation according to this aspect of the invention has the particular advantage compared to prior art installations that it requires no power distribution network comprising current leading cable or electrical parts capable of creating sparks and/or causing ignition of the explosive atmosphere. Moreover, an installation according to the invention is easy to manufacture and to install as it requires no power distribution network, and the operation costs of such an installation are kept to a minimum.

It should be understood that the terms "movable parts" and "stationary parts" should not be interpreted as "globally movable" or "globally stationary" but as "movable" and "stationary" in the same reference coordinate system. Thus, stationary parts may be mounted on movable elements, e.g., on the movable structure comprised in an installation according to the invention.

Preferably at least one generator and more preferably all of the generators are connected to at least one AC/DC to DC converter for converting current supplied by the generator into direct current, so as to supply direct current to one or more of the power consuming parts of the filling assembly. Preferably, a generator is at least partly comprised in each filling assembly. In preferred embodiments of the invention, each generator is connected to an AC to DC converter for converting alternating current supplied by the generator into direct current.

Preferably the stationary parts of the generator comprise a primary coil or wire extending along at least part of the stationary structure, the coil or wire which preferably serves as a conductor cooperates with a stationary ferrite profile extending along at least part of the stationary structure. The movable parts of the generator may comprise a secondary coil arranged on the movable structure, the coil being wound around a profile extending along at least part of at least one filling assembly mounted on the movable structure. In such a power transmission system which *per se* is known from the prior art, the stationary and the movable parts of the generator are arranged with a gap therebetween, so that there is no physical contact between the stationary structure and the movable structure while power is being generated or transmitted.

As an alternative to the generator described above, the one or more of the movable parts of the generator may be mounted rotatably around one or more of the stationary parts, the parts of the generator comprising at least one coil and at least one magnetic member. Preferably both the movable and the stationary parts of the generator being mounted on the movable structure.

The movable structure may comprise a running wheel for running along the stationary structure and being pressed against the stationary structure, e.g., by a spring. The running wheel may be mechanically connected to the rotatably mounted parts of the generator, so that the running wheel is capable of driving the rotatably mounted parts of the generator due to friction between the running wheel and the stationary structure. The generator may comprise a two-, three- or multipolar dynamo.

The below description relates to both aspects of the present invention, except where the contrary is pointed out explicitly.

Each AC to DC converter preferably comprises a transformer for modifying the amplitude of the voltage of current supplied to the transformer from a power supply, each transformer being connected to a rectifier and a capacitor. The AC to DC convert(s) or AC/DC to DC converters are preferably integrated assemblies.

The one or more power consuming parts of at least one of the filling assemblies may comprise one or more of the following parts:

- an electronic scales adapted to weigh at least one container at least during part of the filling process,

- a flow meter for metering the flow rate of gas during the filling process,

- an electrically operable valve adapted to regulate the flow rate of liquified gas into the at least one container during the filling process,

- means for adjusting the container supported by the filling station in vertical and/or horizontal direction in relation to the scales and/or in relation to the valve and/or in relation to other parts comprised in the filling assembly,

- means for connecting and/or fixing the valve to the container supported by the filling station,

- means for removing the valve from the container supported by the filling station,

- electronic control means for controlling the process of filling liquified gas into the container and/or for controlling the position of the container supported by the filling station in relation to the valve and/or in relation to other parts comprised in the filling assembly

The electronic control means may comprise one or more processor units arranged on each filling assembly. The control means of a number of filling assemblies may be communicatively interconnected through data transmission means or they may alternatively/additionally be connected to a central processor unit. The electronic control means and/or associated parts or processor means may be adapted to connect data input and/or output means thereto, such as, e.g., monitors or keyboards.

Preferably, the means for adjusting and/or positioning the container are pneumatically driven.

Preferably, the power consuming parts comprised in the filling assemblies are supplied by direct current. One or more accumulators or batteries for accumulating electrical energy may be comprised in the installation, e.g., in one or more of the filling assemblies. One or more charging means for charging the one or more accumulators may be provided.

The electronic control means are preferably electronically connected to at least one of the electronic scales and/or to at least one of the valves, so as to make a regulation of the flow rate of liquified gas into each container possible.

One or more storage tanks for storing liquified gas may be comprised in the installation according to the invention and may preferably be connected to one or more valves of one or more filling machines. The liquified gas may be liquified petroleum gas or other kind of liquified gas, such as liquid air, liquid hydrogen or any other kind of liquified gas.

Each electronic scales preferably comprises a load cell comprising one or more strain gauges attached to a beam or rod being adapted to at least partly support the container supported by the filling station. Preferably each strain gauge is so adapted that the current running through the strain gauge and/or its electrical resistance is dependent on the strain of the rod or beam supporting at least part of the container. Preferably, the strain gauge is electrically connected to the control means, the control means being adapted to compute the weight of the container and/or the weight or volume of liquified gas comprised therein from the strain of the rod or beam.

Preferably at least some and more preferably all of the power consuming parts of at least some of the filling assemblies and preferably all of the filling assemblies are intrinsically safe. This implies that electrical circuits of the power consuming parts are intrinsically safe. In the present context, an "intrinsically safe" circuit may be understood as a circuit, wherein the short-circuit current and no-load current of intrinsically safe circuits are limited so that sparks and thermal effects capable of causing ignition cannot occur during normal operation or during malfunction.

At least one of the parts capable of igniting an explosive atmosphere may be enclosed in a housing, the design of the housing being such that it may withstand the pressure generated therein in the event of ignition of an explosive medium within the housing. Additionally or alternatively, at least one of the parts capable of igniting an explosive atmosphere may be enclosed in a housing, the housing being filled with fine-grained material, so that an arc created within the housing may not ignite an ambient explosive atmosphere. Such a housing is referred to as an "EXQ" housing below.

At least one of the parts capable of igniting an explosive atmosphere may be embedded in a sealing compound offering a resistance which is sufficiently large to prevent the explosive atmosphere from being ignited by sparks or by excessive temperature rise.

The voltage of the direct current supplied to the power consuming parts of the filling stations may be in the range between 1 V and 100 V, such as between 2 V and 75 V, such as between 3 V and 60 V, usually between 4 V and 50 V, such as between 5 V and 45 V, normally between 6 V and 40 V, such as between 8 V and 36 V, preferably between 9 V and 32 V, such as between 10 V and 27 V, such as between 10 V and 24 V, usually between 10 V and 20 V, preferably between 10 V and 18 V, normally between 10 V and 15 V, such as between 10 V and 14 V, such as between 11 V and 13 V, most preferably approximately 12 V.

Preferably, the power consumption of each filling assembly does not exceed 300 mW. The power consumption of a power consuming part may be expressed as

$$P = \frac{U^2}{R},$$

P denoting the power consumption, U denoting the voltage, and R denoting the resistance of the power consuming part. In case a filling assembly is provided with more than one power consuming part, the power consumption of the filling assembly may be expressed as the sum of the power consumption of all of the power consuming parts comprised in the filling assembly. Equivalently, the power consumption of the power consuming parts of a number of filling assemblies may be determined by summing the power consumption of all of the power consuming parts comprised in all of the filling assemblies.

More preferably, the power consumption of each filling assembly does not exceed 280 mW, more preferably it does not exceed 270 mW, more preferably it does not exceed 260 mW, more preferably it does not exceed 250 mW, more preferably it does not exceed 245 mW, more preferably it does not exceed 240 mW, more preferably it is less than 240 mW, more preferably it less than 220 mW, more preferably it is less than 200 mW, more preferably less than 180 mW, more preferably less than 150 mW and even more preferably less than 100 mW.

Preferably, the resistance of each load cell is greater than 350 Ω, such as greater than 500 Ω, preferably greater than 600 Ω, such as greater than 700 Ω, preferably greater than 750 Ω, such as greater than 800 Ω, preferably greater than 900 Ω, such as greater than 1000 Ω, preferably greater than 1000 Ω, such as greater than 1200 Ω.

Preferably the voltage of the direct current supplied to the power consuming parts of the filling stations is approximately 12 V whereas the resistance of each load cell preferably is greater than the values stated above.

More preferably the voltage of the direct current supplied to the power consuming parts of the filling stations is approximately 12 V, the electrical resistance of each load cell being greater than 600 Ω. More preferably the voltage of the direct current supplied to the power consuming parts of the filling stations is approximately 12 V, the electrical resistance of each load cell being approximately 1000 Ω. More preferably voltage of the direct current supplied to the power consuming parts of the filling stations is approximately 12 V, the electrical resistance of each load cell being greater than 1000 Ω.

Preferably each of the at least one AC/DC to DC converter is adapted to supply direct current to at least 2 filling assemblies, such as 4 filling assemblies, preferably 8 filling assemblies or more, such as 10 filling assemblies, more preferably 12 filling assemblies or more, such as 15 filling assemblies, preferably 18 filling assemblies, more preferably 20 filling assemblies or more, such as 22 filling assemblies, preferably 24 filling assemblies, more preferably more than 24 filling assemblies, such as 26, 28, 30, 32, 34, 36, 38, 40, 42, 44, 46, 48, 50 or more filling assemblies.

BRIEF DESCRIPTION OF THE DRAWINGS

    Fig. 1 is a perspective view of a first embodiment of an installation according to the invention,

    Fig. 2 is a perspective view of a second embodiment of an installation according to the invention,

    Fig. 3 is a top view of an installation according to the invention,

    Fig. 4 is a front view of a filling assembly comprised in a filling installation according to invention,

    Fig. 5 is a side view of the filling assembly of Fig. 4,

    Fig. 6 is a diagrammatic illustration of the power supply system of a prior art installation,

    Fig. 7 is a diagrammatic illustration of the power distribution network of an installation according to the invention,

Fig. 8 is a sketch of a detail of a generator for supplying current to power consuming parts comprised in the installation according to the invention.

## DETAILED DESCRIPTION OF THE DRAWINGS

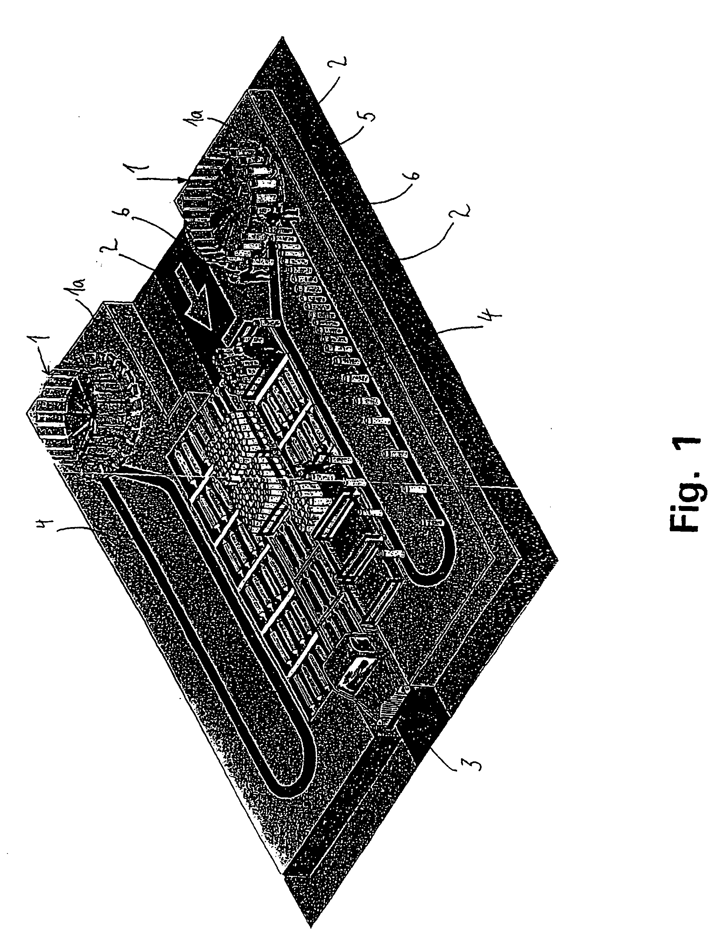

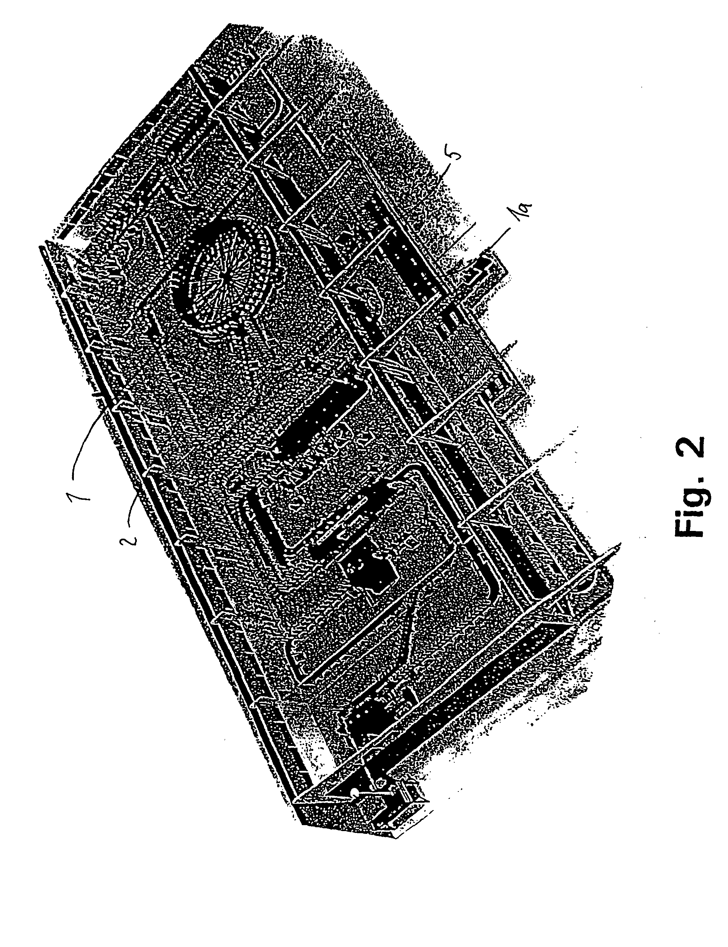

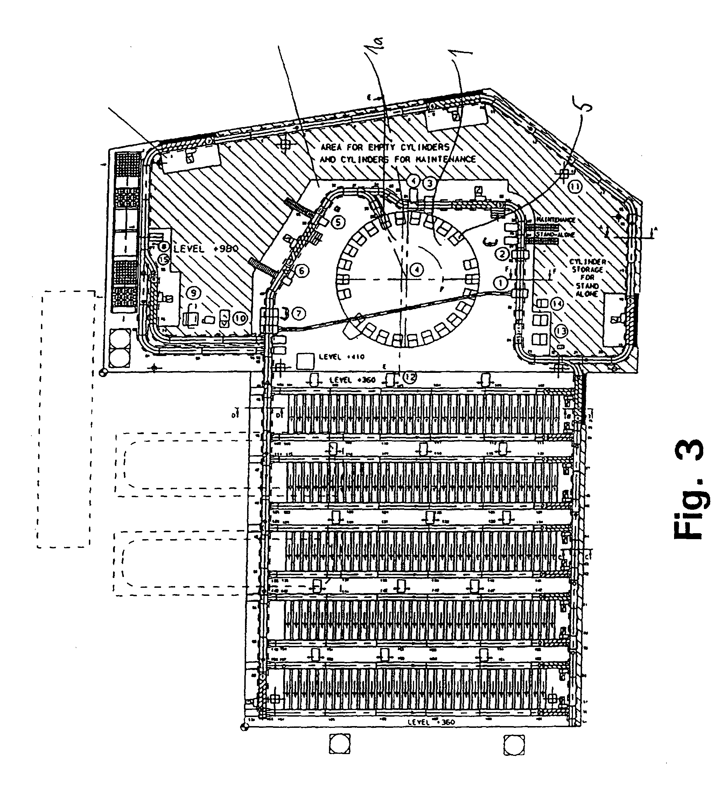

Fig. 1-3 are perspective views of an installation according to the invention. The installation comprises one or more carrousels or turntables 1 on which containers 2 are conveyed while being filled with liquified gas. The carrousels are arranged on a stationary structure 1 a. Empty or nearly empty containers are brought to the installation by, e.g., a truck from which they are transferred to a conveyor 4. Each filling carrousel 1 comprises a number of filling assemblies 5 on which the containers 2 are being filled with liquified gas.

The containers 2 may be handled in a semiautomatic way where operators 6 cooperate with automatic conveyor or handling means, or in a fully automatic way.

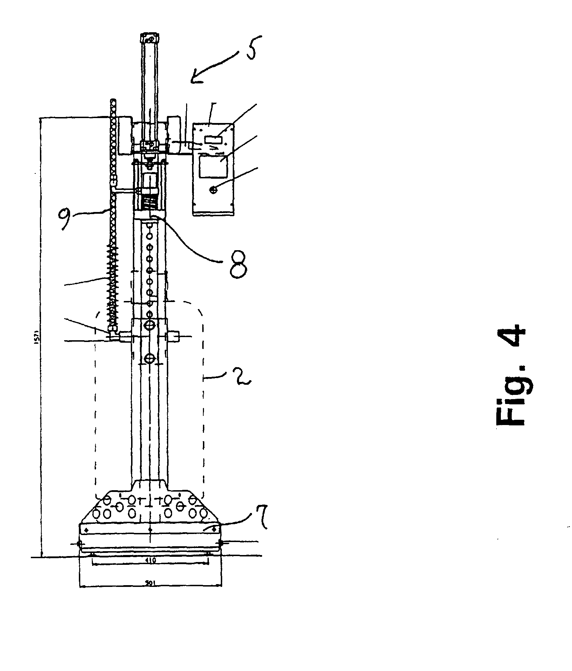

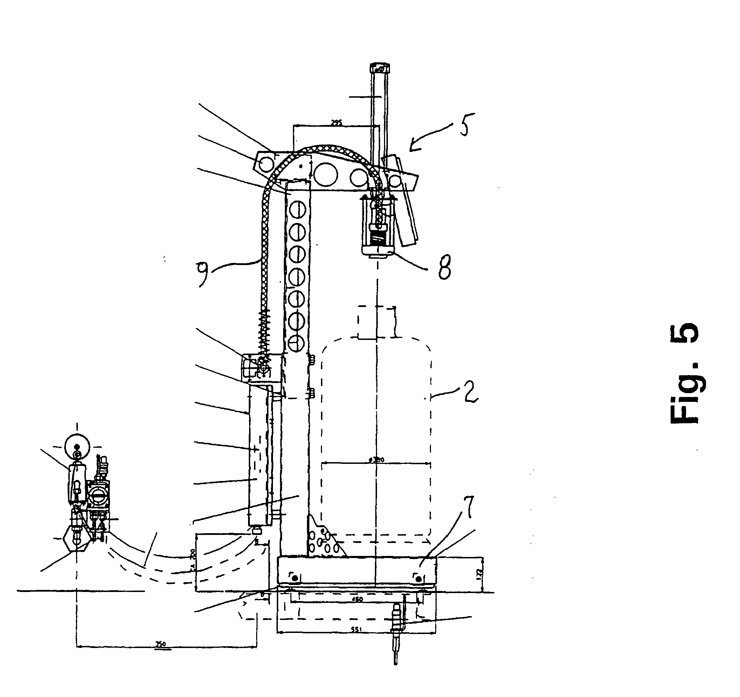

Figs. 4 and 5 show a filling assembly 5. The filling assembly 5 comprises a platform 7 on which the container 2 is positioned during the process of filling liquified gas into the container. An electronic scales for weighing the container 2 is comprised in the platform 7. The filling assembly 5 further comprises a filling head 8 comprising a valve for regulating the flow rate of liquified gas into the container. The filling head 8 is connected to a storage tank for storing liquified gas through a pipe 9. The electronic scales comprised in the platform 7 is electronically connected to a control system which is capable of opening and closing the valve comprised in the filling head 8, so as to, e.g., close the valve when the container 2 and the liquified gas comprised therein has reached a desired or pre-set weight.

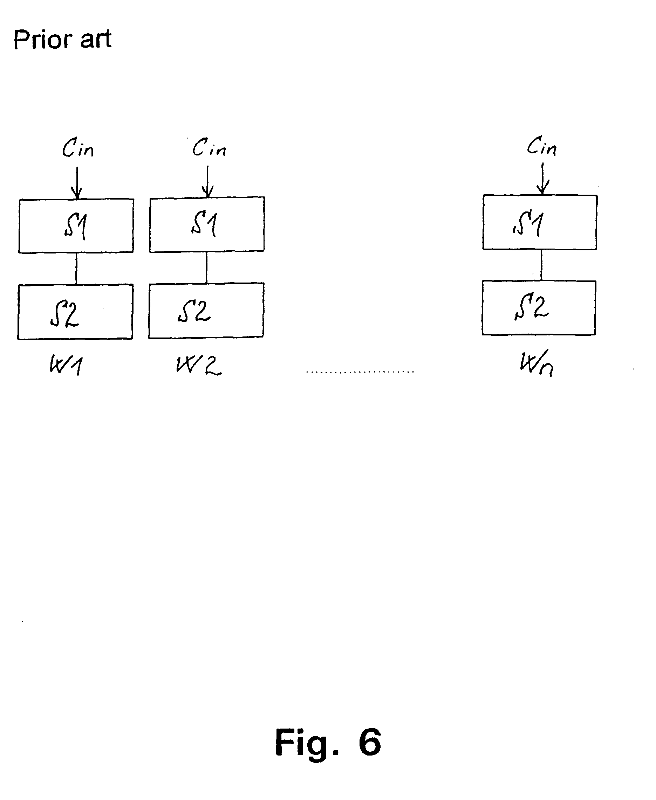

Fig. 6 is a diagrammatic illustration of the power supply system of a prior art installation. The installation is supplied with alternating current or with direct current, the power supply being indicated by reference signs Cin. The power supply Cin may be 1 15 or 230 V AC or 24 V DC. The supplied power is led through a power supply unit comprising an AC/DC to DC converter S1 which is preferably embedded in an "EXQ" housing as described above. A number of filling assemblies S2 are supplied with direct current from a number of power supply units S1, whereby a power supply unit S1 is associated to each filling assembly S2. The filling assemblies S2 are provided with scales W1, W2, ..., Wn for weighing containers. Usually, a prior art system as illustrated in Fig. 6 is provided with 20-50 filling assemblies S2 each comprising a scales. Normally, any electrical part of each filling assembly S2 is intrinsically safe as described above.

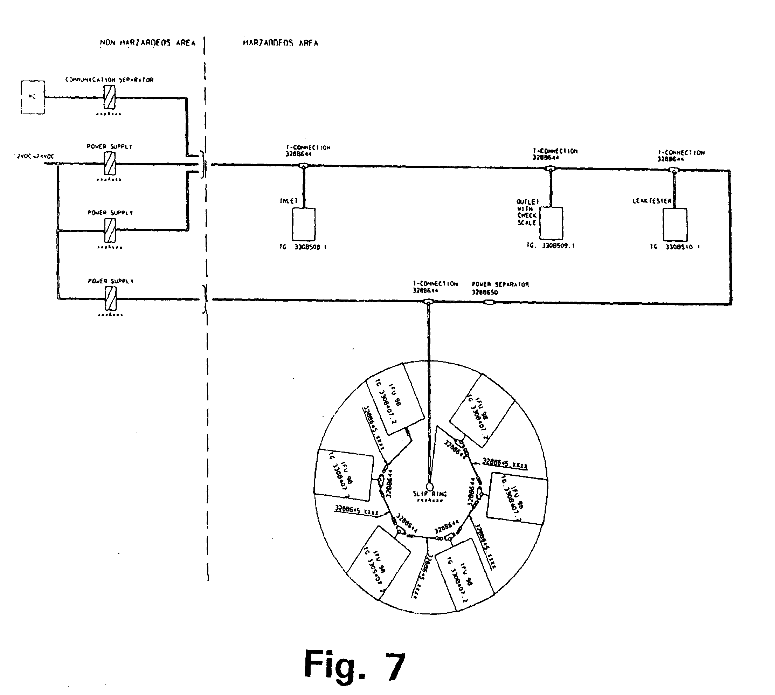

Fig. 7 is an illustration of a power distribution network of an installation according to a first aspect of the invention. All high voltage power units are positioned in a non-explosive environment (non-hazardous area). To considerable reduce the risk of creating sparks and/or causing ignition only low voltage units are positioned in the highly explosive environment (hazardous area). The installation is supplied with alternating current or direct current, preferably 115 or 230 V AC or 24 V DC or 12 V DC. In case where the voltage of the supplied power exceeds approximately 12 V DC, the voltage is converted to 12 V DC using DC to DC converters.

A number of filling assemblies UFM are supplied with direct current from the converters (power supplies). Each filling assembly UFM is provided with a scales for weighing containers. In a preferred embodiment of the invention, the installation is provided with 24 filling assemblies UFM each comprising a scales. Compared to the prior art installation of Fig. 6, the installation of Fig. 7 has the particular advantage that all high voltage units are positioned outside the highly explosive area (hazardous area). Accordingly, the need for "EXQ" housings is eliminated since the power distribution network in the highly explosive area is a pure low-voltage network.

The power supply systems illustrated in Figs. 6 and 7 may, e.g., be comprised in the installations shown in Figs. 1-3. The filling assemblies, denoted S2 in Fig. 6 and UFM in Fig. 7, may be of the type shown in Figs. 4 and 5.

Fig. 7 also shows means for identifying container INLET at the entry of the installation. Further, means for testing (OUTLET WITH CHECK SCALE and LEAKTESTER) are also shown in Fig. 7. Even further, Fig. 7 shows a communication and power separator and electronic control means PC.

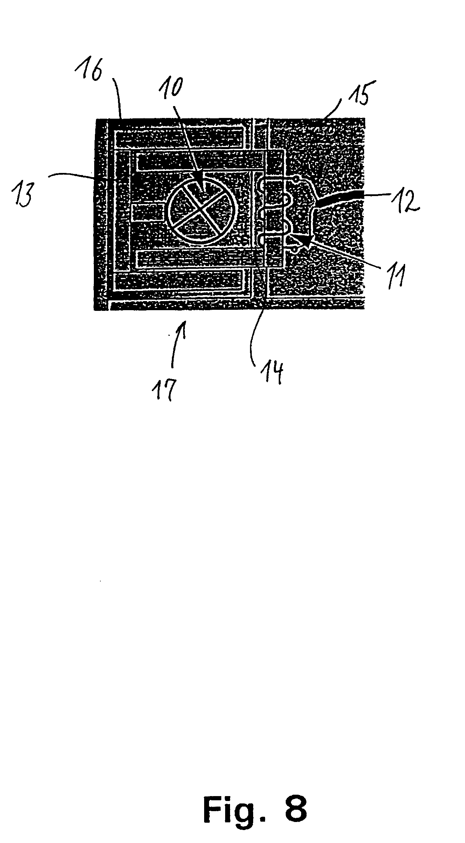

Fig. 8 is a sketch of a detail of a generator 17 for supplying current to power consuming parts comprised in an installation according to a second aspect of the invention.

The generator 17 comprises a stationary primary coil or wire 10 extending along an E-shaped track or profile 13 comprised in the stationary structure 1 a (cf. Figs. 1-3) and extending along the carrousel 1. The primary coil or conductor 10 co-operates with the stationary profile 13 which is preferably a ferrite profile. The movable parts of the generator 17 comprise a secondary coil 11 arranged on each filling assembly 5, the coil 11 being wound around an U-shaped profile 14 extending along the filling assembly or part thereof. The E-shaped profile 13 and the U-shaped profile 14 are arranged with a gap therebetween, so that there is no physical contact between the stationary parts and the movable parts of the generator 17. The induced current is led through a cable 12 to one or more power consuming parts comprised in the filling assembly 5 or to a charger charging an accumulator.

## Claims

1. An installation for filling liquified gas into containers (2) and comprising:

   - a plurality of filling assemblies (5) being mounted on a carrousel (1), each filling assembly (5) comprising one or more power consuming parts and being adapted to support a container (2) at least during the process of filling liquified gas into the container (2), the power consuming parts of the filling assemblies (5) being intrinsically safe, the electrical circuits of the power consuming parts thus being intrinsically safe,

   - at least one AC/DC to DC converter for converting alternating current from an alternating current power supply or direct current from a direct current power supply into direct current, each AC/DC to DC converter being adapted to supply direct current to at least two filling assemblies (5),

   - the at least one AC/DC to DC converter being positioned in a non-explosive environment at a remote location relative to the carrousel (1).

2. An installation according to claim 1, wherein the one or more power consuming parts of each filling assembly (5) comprises an electronic scales adapted to weigh at least one container (2) at least during part of the filling process.

3. An installation according to claim 2, wherein each electronic scales comprises a load cell comprising one or more strain gauges attached to a beam or rod being adapted to at least partly support the container (2) supported by the filling assembly (5).

4. An installation according to any of claims 1-3, wherein the power consumption of each filling assembly (5) does not exceed 300 mW.

5. An installation according to claim 3 or 4 wherein the electrical resistance of each load cell is greater than 350 $\Omega$.

6. An installation according to any of the preceding claims, wherein each AC/DC to DC converter is adapted to supply direct current to at least twelve filling assemblies (5).

7. An installation according to any of the preceding claims, wherein the voltage of the alternating power supply is in the range between 110 V and 120 V or in the range between 210 V and 240 V.

8. An installation according to claim 7, wherein the voltage of the direct current supply is between 6 V and 40 V.

9. An installation according to any of claims 1-8, wherein the one or more power consuming parts of at least one of the filling assemblies (5) comprises one or more of the following parts:

   - a flow meter for metering the flow rate of gas during the filling process,

   - an electrically controllable valve adapted to regulate the flow rate of liquified gas into the at least one container (2) during the filling process,

   - means for adjusting the container (2) supported by the filling assembly (5) in vertical and/or horizontal direction in relation to the scales and/or in relation to the valve and/or in relation to other parts comprised in the filling assembly (5),

   - means for connecting and/or fixing the valve to the container (2) supported by the filling assembly (5),

   - means for removing the valve from the container (2) supported by the filling assembly (5),

   - electronic control means for controlling the process of filling liquified gas into the container (2) and/or for controlling the position of the container (2) supported by the filling assembly (5) in relation to the valve and/or in relation to other parts comprised in the filling assembly (5).

10. An installation according to any of claims 1-9, further comprising one or more accumulators for accumulating electrical energy.

11. An installation according to claim 10, wherein each filling assembly (5) comprises one or more accumulators adapted to supply direct current to at least one of the power consuming parts of the filling assembly (5).

12. An installation according to claim 11, wherein the voltage of the power supplied by the accumulators is approximately 12 V.

13. An installation according to claim 11 or 12, further comprising one or more charging means for charging the one or more accumulators.

14. An installation according to claim 13, wherein each filling assembly (5) comprises one or more charging means for charging the one or more accumulators.

**15.** An installation according to any of claims 9-14, wherein the electronic control means are electronically connected to at least one of the electronic scales and/or to at least one of the valves.

**16.** An installation according to any of claims 9-15, further comprising at least one storage tank for storing liquified gas, the storage tank being connected to one or more valves of one or more filling assemblies (5).

**17.** An installation according to any of claims 1-16, wherein the liquified gas is liquified petroleum gas.

**Patentansprüche**

**1.** Anlage zum Abfüllen von Flüssiggas in Behälter (2) und aufweisend:

- mehrere auf einem Karussell (1) montierte Abfüllanordnungen (5), wobei jede Abfüllanordnung (5) eine oder mehrere stromverbrauchende Teile aufweist und für die Unterstützung eines Behälters (2) wenigstens während des Abfüllprozesses von Flüssiggas in den Behälter (2) angepaßt ist, die stromverbrauchenden Teile der Abfüllanordnungen (5) eigensicher sind, und somit die elektrischen Schaltungen der Energie versorgenden Teile eigensicher sind,

- wenigstens einen AC/DC-zu-DC-Wandler zum Umwandeln von Wechselstrom aus einer Wechselstromenergiequelle oder von Gleichstrom aus einer Gleichstromenergiequelle in Gleichstrom, wobei jeder AC/DC-zu-DC-Wandler zur Lieferung von Gleichstrom an wenigstens zwei Abfüllanordnungen (5) angepaßt ist,

wobei der wenigstens eine AC/DC-zu-DC-Wandler in einer nicht-explosiven Umgebung an einer entfernten Stelle in Bezug auf das Karussell (1) angeordnet ist.

**2.** Anlage nach Anspruch 1, wobei das eine oder die mehreren stromverbrauchenden Teile jeder Abfüllanordnung (5) eine elektronische Waage aufweisen, die zum Wiegen wenigstens eines Behälters (2) zumindest während wenigstens einem Teil des Abfüllprozesses angepaßt ist.

**3.** Anlage nach Anspruch 2, wobei jede elektronische Waage eine Kraftmeßzelle aufweist, die eine oder mehrere Dehnmeßstreifen aufweist, die an einem Träger oder Stab befestigt sind, der dafür angepaßt ist, wenigstens teilweise den von der Abfüllanordnung (5) unterstützten Behälter (2) zu unterstützen.

**4.** Anlage nach Anspruch 1 bis 3, wobei der Stromverbrauch jeder Abfüllanordnung (5) 300 mW nicht überschreitet.

**5.** Anlage nach Anspruch 3 oder 4, wobei der elektrische Widerstand jeder Kraftmeßdose größer als 350 Ω ist.

**6.** Anlage nach einem der vorstehenden Ansprüche, wobei jeder AC/DC-zu-DC-Wandler dafür angepaßt ist, Gleichstrom an wenigstens zwölf Abfüllanordnungen (5) zu liefern.

**7.** Anlage nach einem der vorstehenden Ansprüche, wobei die Spannung der Wechselstromenergieversorgung in dem Bereich zwischen 110 V und 120 v oder in dem Bereich zwischen 210 V und 240 V liegt.

**8.** Anlage nach Anspruch 7, wobei die Spannung der Gleichstromversorgung zwischen 6 V und 40 V liegt.

**9.** Anlage nach einem der vorstehenden Ansprüche 1 bis 8, wobei das eine oder die mehreren stromverbrauchenden Teile von wenigstens einer von den Abfüllanordnungen (5) eines oder mehrere von den nachstehenden Teilen aufweisen:

- einen Durchflußmesser zum Messen der Durchflußrate des Gases während des Abfüllprozesses,

- ein elektrisch steuerbares Ventil, das zum Regeln der Durchflußrate des Flüssiggases in den wenigstens einen Behälter (2) während des Abfüllprozesses angepaßt ist,

- eine Einrichtung zum Ausrichten des von der Abfüllanordnung (5) unterstützten Behälters (2) in vertikaler und/oder horizontaler Richtung in Bezug auf die Waage und/oder in Bezug auf das Ventil und/oder in Bezug auf andere Teile die in der Abfüllanordnung (5) enthalten sind,

- eine Einrichtung zum Verbinden mit und/oder Fixieren des Ventils an dem Behälter (2), der von der Abfüllanordnung (5) unterstützt wird,

- eine Einrichtung zum Entfernen des Ventils von dem von der Abfüllanordnung (5) unterstützten Behälter (2),

- eine elektronische Steuereinrichtung zum Steuern des Abfüllprozesses von Flüssiggas in den Behälter (2) und/oder zum Steuern der Position des von der Abfüllanordnung (5) unterstützten Behälters (2) in Bezug auf das Ventil und/oder in Bezug auf die anderen Teile, die in der Abfüllanordnung (5) enthalten sind.

10. Anlage nach einem der vorstehenden Ansprüche 1 bis 9, welche ferner einen oder mehrere Akkumulatoren zum Speichern von elektrischer Energie aufweist.

11. Anlage nach Anspruch 10, wobei jede Abfüllanordnung (5) einen oder mehrere Akkumulatoren aufweist, die zum Zuführen von Gleichstrom zu wenigstens einem von den stromverbrauchenden Teilen der Abfüllanordnung (5) angepaßt sind.

12. Anlage nach Anspruch 11, wobei die Spannung der durch die Akkumulatoren gelieferten Energie etwa 12 V ist.

13. Anlage nach Anspruch 11 oder 12, welche ferner eine oder mehrere Ladeeinrichtungen zum Laden des einen oder der mehreren Akkumulatoren aufweist.

14. Anlage nach Anspruch 13, wobei jede Abfüllanordnung (5) eine oder mehrere Ladeeinrichtungen zum Laden des einen oder der mehreren Akkumulatoren aufweist.

15. Anlage nach Anspruch 9 bis 14, wobei die elektronischen Steuereinrichtungen elektronisch mit wenigstens einer von den elektronischen Waagen und/oder wenigstens einem von den Ventilen verbunden sind.

16. Anlage nach Anspruch 9 bis 15, welche ferner wenigstens einen Speichertank zum Speichern von Flüssiggas aufweist, wobei der Speichertank mit einem oder mehreren Ventilen von einer oder mehreren Abfüllanordnungen (5) verbunden ist.

17. Anlage nach Anspruch 1 bis 16, wobei das Flüssiggas verflüssigtes Erdölgas ist.

**Revendications**

1. Installation de remplissage de gaz liquéfié dans des réservoirs (2) comprenant :

   - une pluralité d'ensembles de remplissage (5) montés sur un carrousel (1), chaque ensemble de remplissage (5) comprenant une ou plusieurs parties consommatrices d'électricité et étant adapté pour supporter un réservoir (2) au moins pendant le processus de remplissage de gaz liquéfié dans le réservoir (2), les parties consommatrices d'électricité des ensembles de remplissage (5) étant intrinsèquement sûres, les circuits électriques des parties consommatrices d'électricité étant donc intrinsèquement sûrs,

   - au moins un convertisseur de CA/CC en CC pour convertir le courant alternatif provenant d'une source d'alimentation en courant alternatif ou le courant continu provenant d'une source d'alimentation en courant continu en courant continu, chaque convertisseur de CA/CC en CC étant adapté pour alimenter au moins deux ensembles de remplissage (5) en courant continu,

   - le, au moins un, convertisseur de CA/CC en CC étant positionné dans un environnement non explosif dans un endroit à distance du carrousel (1).

2. Installation selon la revendication 1, dans laquelle la ou les parties consommatrices d'électricité de chaque ensemble de remplissage (5) comprennent une balance électronique adaptée pour peser au moins un réservoir (2) au moins pendant une partie du processus de remplissage.

3. Installation selon la revendication 2, dans laquelle chaque balance électronique comprend une cellule de charge comprenant une ou plusieurs jauges de contrainte fixées à une poutre ou à une tige étant adaptée pour supporter au moins en partie le réservoir (2) supporté par l'ensemble de remplissage (5).

4. Installation selon l'une quelconque des revendications 1 à 3, dans laquelle la consommation d'électricité de chaque ensemble de remplissage (5) ne dépasse pas 300 mW.

5. Installation selon la revendication 3 ou 4, dans laquelle la résistance électrique de chaque cellule de charge est supérieure à 350 Ω.

6. Installation selon l'une quelconque des revendications précédentes, dans laquelle chaque convertisseur de CA/CC en CC est adapté pour alimenter au moins douze ensembles de remplissage (5) en courant continu.

7. Installation selon l'une quelconque des revendications précédentes, dans laquelle la tension de l'alimentation en courant alternatif est comprise entre 110 V et 120 V ou entre 210 V et 240 V.

8. Installation selon la revendication 7, dans laquelle la tension de l'alimentation en courant continu est comprise entre 6 V et 40 V.

9. Installation selon l'une quelconque des revendications 1 à 8, dans laquelle la ou les parties consommatrices d'électricité des ensembles de remplissage (5) comprennent une ou plusieurs des pièces suivantes :

- un débitmètre pour mesurer le débit de gaz pendant le processus de remplissage,
- une vanne à contrôle électrique adaptée pour réguler le débit de gaz liquéfié dans le, au moins un, réservoir (2) pendant le processus de remplissage,
- des moyens pour ajuster le réservoir (2) supporté par l'ensemble de remplissage (5) dans le sens vertical et/ou horizontal par rapport à la balance et/ou par rapport à la vanne et/ou par rapport à d'autres pièces comprises dans l'ensemble de remplissage (5),
- des moyens pour connecter et/ou fixer la vanne au réservoir (2) supporté par l'ensemble de remplissage (5),
- des moyens pour retirer la vanne du réservoir (2) supporté par l'ensemble de remplissage (5),
- des moyens de contrôle électronique pour contrôler le processus de remplissage de gaz liquéfié dans le réservoir (2) et/ou pour contrôler la position du réservoir (2) supporté par l'ensemble de remplissage (5) par rapport à la vanne et/ou par rapport à d'autres pièces comprises dans l'ensemble de remplissage (5).

10. Installation selon l'une quelconque des revendications 1 à 9, comprenant en outre un ou plusieurs accumulateurs pour accumuler l'énergie électrique.

11. Installation selon la revendication 10, dans laquelle chaque ensemble de remplissage (5) comprend un ou plusieurs accumulateurs adaptés pour alimenter au moins l'une des parties consommatrices d'électricité de l'ensemble de remplissage (5) en courant continu.

12. Installation selon la revendication 11, dans laquelle la tension du courant fourni par les accumulateurs est d'environ 12 V.

13. Installation selon la revendication 11 ou 12, comprenant en outre un ou plusieurs moyens de chargement pour charger le ou les accumulateurs.

14. Installation selon la revendication 13, dans laquelle chaque ensemble de remplissage (5) comprend un ou plusieurs moyens de chargement pour charger le ou les accumulateurs.

15. Installation selon l'une quelconque des revendications 9 à 14, dans laquelle les moyens de contrôle électronique sonL connectés électroniquement à au moins l'une des balances électroniques et/ou à au moins l'une des vannes.

16. Installation selon l'une quelconque des revendications 9 à 15, comprenant en outre au moins une cuve de stockage pour stocker le gaz liquéfié, la cuve de stockage étant connectée à une ou plusieurs vannes d'un ou de plusieurs ensembles de remplissage (5).

17. Installation selon l'une quelconque des revendications 1 à 16, dans laquelle le gaz liquéfié est du gaz de pétrole liquéfié.

**Fig. 1**

EP 1 051 580 B1

**Fig. 2**

Fig. 3

Fig. 4

**Fig. 5**

Prior art

Fig. 6

Fig. 7

Fig. 8